# EUROPÄISCHE PATENTSCHRIFT

(11) **EP 1 043 195 B1**
(45) Veröffentlichungstag und Bekanntmachung des Hinweises auf die Patenterteilung: **23.07.2003**
(21) Anmeldenummer: 00107079.6
(22) Anmeldetag: 05.04.2000
(51) Int. Cl.: B60R 21/16

(54) **Faltverfahren für den Luftsack eines Seitenairbags**
Folding method for a side air bag
Méthode de pliage pour un coussin gonflable latéral

(30) Priorität: 09.04.1999 DE 19916084
(43) Veröffentlichungstag der Anmeldung: 11.10.2000
(73) Patentinhaber: TRW Automotive Safety Systems GmbH, 63743 Aschaffenburg (DE)
(72) Erfinder: Salzmann, Claudia, 97816 Lohr (DE); Weis, Andreas, 63739 Aschaffenburg (DE)
(74) Vertreter: Sties, Jochen, Dipl.-Ing.

(56) Entgegenhaltungen:
- EP-A- 0 800 961
- US-A- 5 493 846
- US-A- 5 823 567

## Beschreibung

Die Erfindung betrifft ein Verfahren zum Falten eines Luftsacks eines Seitenairbags in eine Packform, der aus einem im wesentlichen rechteckigen, an den Ecken gerundeten Gewebeabschnitt besteht, der längs einer Faltkante A auf eine etwa quadratische Form gefaltet ist und dessen übereinandergelegte, freie Ränder zur Ausbildung eines geschlossenen Luftsacks miteinander verbunden sind und in dem im Bereich der Faltkante A ein Anschlußblech für einen Gasgenerator mit nach außen durch das Gewebe vorstehenden Befestigungsbolzen angeordnet werden kann.

Ein solches Falt verfahren ist aus den EP 800961 A bekannt.

Die Packform eines Luftsacks für ein Airbagmodul wird einmal durch den verfügbaren Einbauraum und zum anderen vom gewünschten Expansionsverhalten des Luftsacks beim explosionsartigen Aufblasen in einer Unfallsituation bestimmt. Bei sog. Seitenairbags, die die Verletzungsgefahr der Fahrzeuginsassen bei quer zur Fahrzeuglängsachse gerichteten Beschleunigungskräften vermindern sollen, muß der Konstrukteur zum einen mit verhältnismäßig kleinen Einbauräumen auskommen und zum anderen sehr kurze Aufblaszeiten realisieren, die im Bereich von 20 bis 30 % der Aufblaszeiten liegen, die für Frontairbags zur Verfügung stehen. Packformen, die diesen Bedingungen genügen, müssen außerdem möglichst wirtschaftlich realisierbar sein.

Für eine Packform, die alle vorgenannten Bedingungen erfüllt, wird erfindungsgemäß ein Verfahren vorgeschlagen, mit folgenden Schritten :
- der zur Faltkante A etwa senkrecht verlaufende Rand des das Anschlußblech (3) nicht enthaltenden Teils des Luftsacks wird in den Luftsack eingestülpt, so daß er parallel und benachbart zum gegenüberliegenden Rand liegt und daß eine im wesentlichen überall vierlagige, sich parallel zum Anschlußblech erstreckende Faltform entsteht,
- die beiden Gewebeabschnittshälften werden parallel zur Faltkante A zu einer Faltform eingefaltet, bei der das Anschlußblech unmittelbar neben einer randseitigen Faltkante liegt, die dieser Faltkante gegenüberliegenden Ränder der Gewebeabschnitte nebeneinanderliegend angeordnet sind und das Anschlußblech und die Gewebeabschnitte in zueinander parallelen Ebenen liegen,
- diese Faltform wird unter Verwendung eines Faltlineals längs zur Faltkante sowie zueinander paralleler und vom Anschlußblech sowie voneinander beabstandeter Faltkanten um etwa 90° aus der zum Anschlußblech parallelen Ebene nach unten umgelegt, wobei zwischen je zwei Lagen der Gewebeabschnitte ein Freiraum für das Einschieben eines Faltlineals gebildet wird,
- der Freiraum wird mittels eines Faltlineals verbreitert, und das restliche Gewebematerial wird anschließend mittels weiterer, außen angreifender und eingeschobener Faltlineale beidseitig von der Mitte des Freiraums mehrfach mäanderförmig in zum Anschlußblech parallele Lagen eingefaltet, und es wird schließlich
- die so entstandene Packform um zwei senkrecht zueinander verlaufende Faltkanten um 180° umgelegt und rückseitig an den das Anschlußblech enthaltenden Luftsackbereich angedrückt.

Es hat sich gezeigt, daß auf diese Weise eine Packform erreicht werden kann, in der der Luftsack für einen Seitenairbag ohne Probleme auf den verfügbaren Einbauraum zusammengelegt werden kann, ohne daß sich beim explosionsartigen Aufblasen irgendwelche unnötigen Verzögerungen ergeben, durch die die vorgeschriebene kurze Aufblaszeit überschritten würde. Der Faltaufwand bleibt im Rahmen üblicher Luftsack-Faltverfahren. Hinsichtlich der Anordnung des Anschlußbleches ist sowohl eine symmetrische wie auch eines asymmetrische Lage realisierbar.
Das erfindungsgemäße Faltverfahren wird anhand des in den Figuren 1 bis 9 dargestellten Ausführungsbeispiels näher erläutert. Es zeigen:
- Figur 1: die Ausgangsform des Luftsacks;
- Figur 2: in einer Draufsicht und einer Schnittansicht einen ersten Faltschritt, durch den die eine Hälfte des Luftsacks in die andere eingestülpt wird;
- Figur 3: in einer Draufsicht und einer Schnittansicht einen zweiten Faltschritt zur Anordnung des Anschlußbleches in der Erstreckungsebene des Luftsacks;
- Figur 4: in einer Draufsicht und einer Schnittansicht den nächsten Faltschritt, durch den der Bereich neben dem Anschlußblech um etwa 90° geklappt wird;
- Figur 5 bis 7: in einer Schnittansicht weitere Faltschritte;
- Figur 8: in einer Draufsicht und einer Schnittansicht die mit dem vorletzten Faltschritt erreichte Packform;
- Figur 9: in einer Draufsicht und einer Schnittansicht die endgültige Packform.

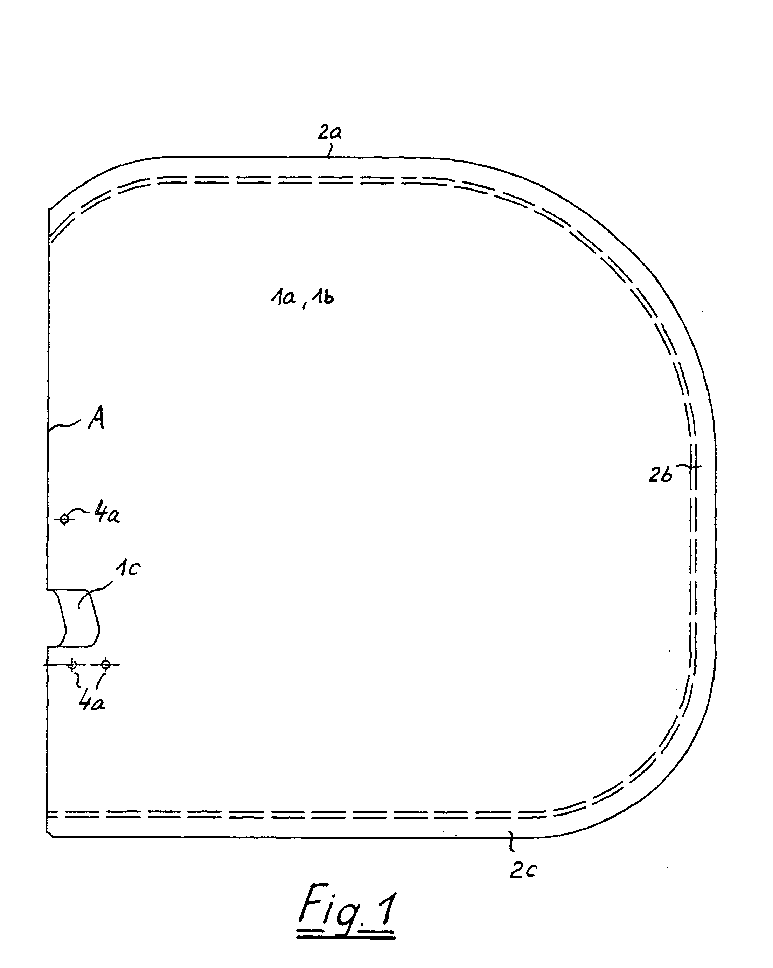

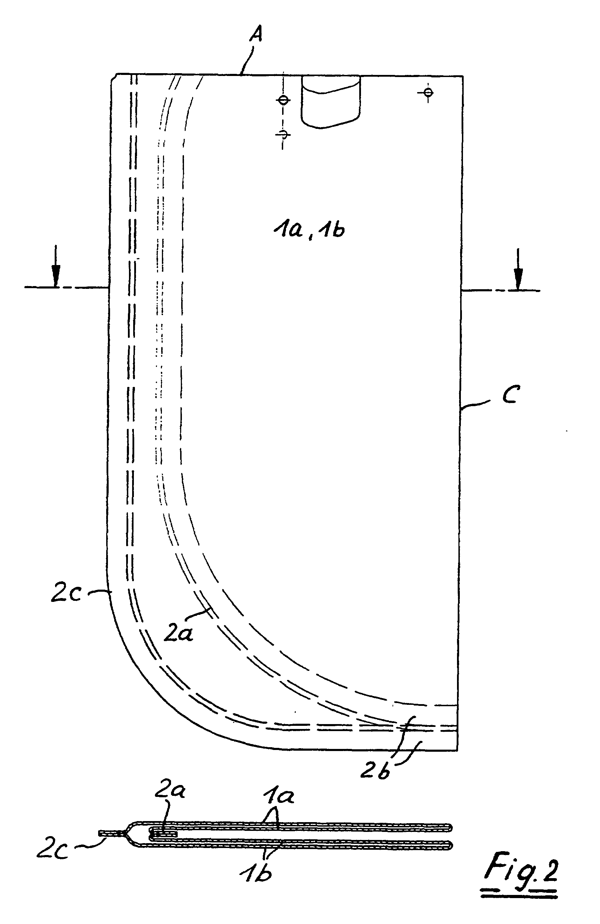

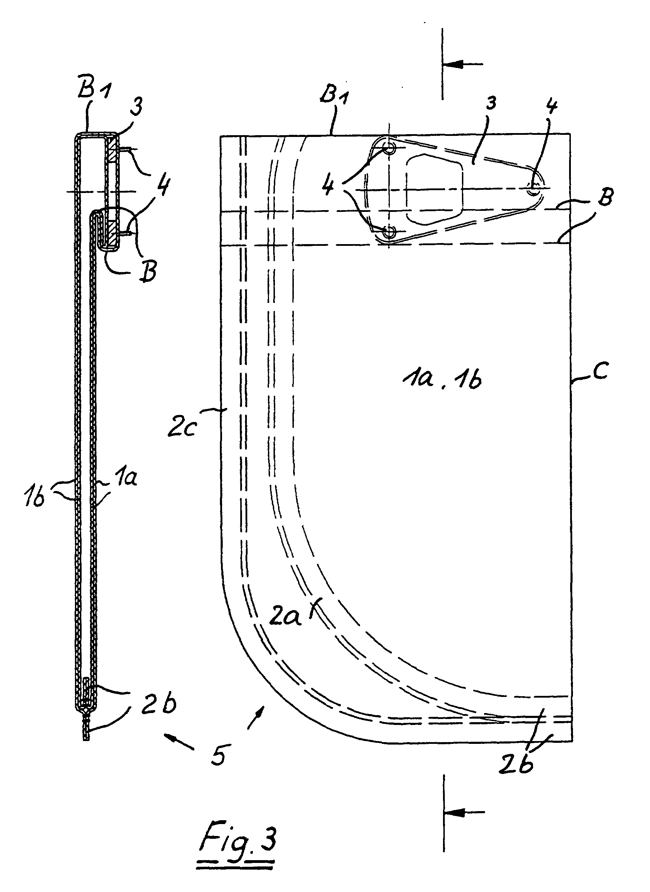

Die in Figur 1 dargestellte Ausgangsform zeigt einen Gewebeabschnitt 1 mit übereinandergelegten Gewebeabschnittshälften 1a und 1b, die eine gemeinsame Faltkante A und miteinander verbundene Ränder 2a, 2b, 2c aufweisen. Außerdem sind eine Aufblasöffnung 1c sowie Löcher 4a für das Durchstecken von Befestigungsbolzen vorgesehen. Bevor das erfindungsgemäße Faltverfahren durchgeführt wird, kann zwischen die beiden Gewebeabschnittshälften 1a, 1b durch die Aufblasöffnung 1c ein Anschlußblech 3 (siehe Fig. 3) so eingelegt werden, daß dessen Befestigungsbolzen 4 durch die Löcher 4a nach außen vorstehen. In einem ersten Faltschritt wird der obere Rand 2a zwischen die Gewebeabschnittshälften 1a und 1b eingestülpt, so daß er dem unteren Rand 2c im wesentlichen parallel gegenüberliegt. Dadurch werden die Gewebeabschnittshälften 1a und 1b quasi gedoppelt, wie aus der Schnittdarstellung von Figur 2 ersichtlich ist.
Anschließend werden das Anschlußblech 3 und die Gewebeabschnittshälften 1a und 1b in zueinander parallele Erstreckungsebenen gebracht, indem die Gewebeabschnittshälfte 1a parallel zur Faltkante A längs der Faltkanten B und B 1 eingefaltet wird. Dadurch wird die in Figur 3 dargestellte Faltform 5 erreicht.

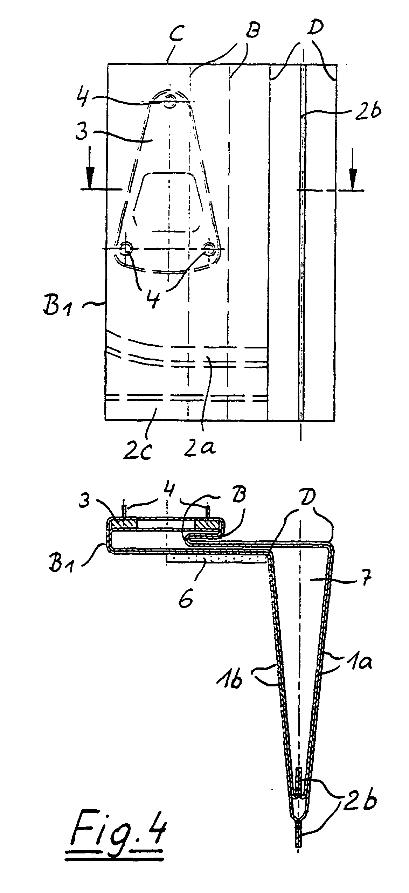

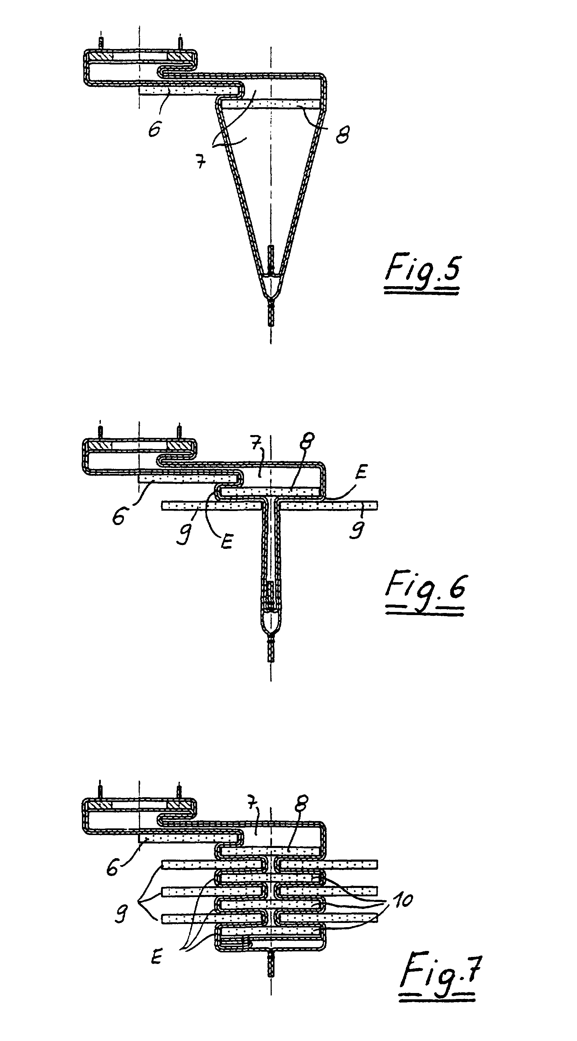

Als nächstes wird gemäß Figur 4 der rechte Teil der Packform 5 längs der Faltlinie D etwa 90° aus der zum Anschlußblech 3 parallelen Ebene nach unten umgelegt, wobei zwischen je zwei Lagen der Gewebeabschnittshälften 1a, 1b ein Freiraum 7 für das Einschieben eines Faltlineals gebildet wird. Das Umlegen nach unten erfolgt unter Verwendung eines Faltlineals 6, das parallel zur Faltkante A angelegt wird. Ausgehend von der Faltform gemäß Figur 4 werden anschließend unter Verwendung eingeschobener und außen angelegter Faltlineale 8, 9, 10 die sich aus den Figuren 5 bis 7 ergebenden Faltungen vorgenommen, wodurch der größte Teil des Luftsacks mäanderförmig übereinander gelegt wird. An dieser Stelle ist darauf hinzuweisen, daß die Dicke der Gewebeabschnittshälften 1a, 1b verglichen mit den Längs- und Querabmessungen des Luftsacks vergrößert dargestellt ist, da ansonsten zeichentechnisch die einzelnen Lagen des Gewebeabschnitts nicht sichtbar gemacht werden könnten. Dadurch erscheint die Dicke des Faltpackets wesentlich größer als in Wirklichkeit.

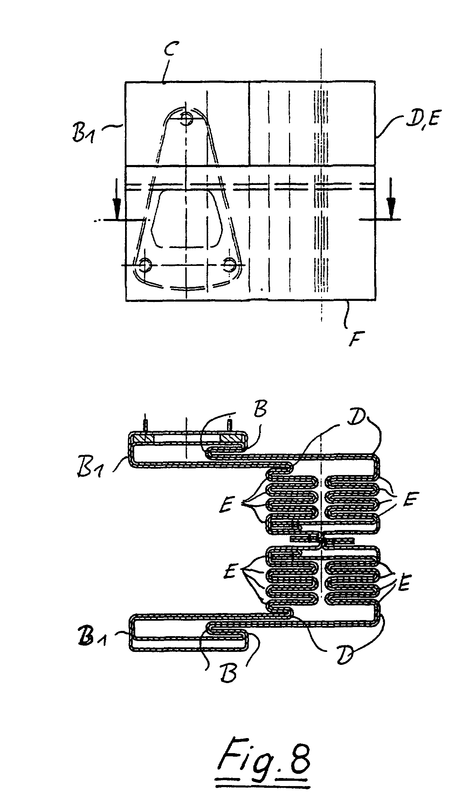

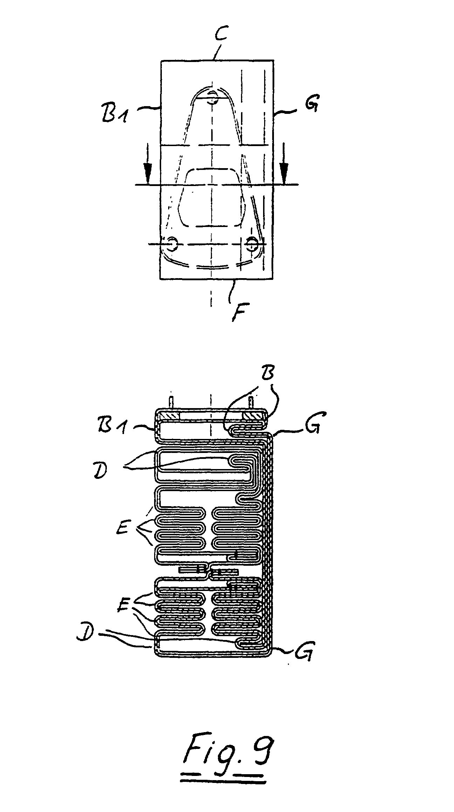

Das Faltpacket mit der mäanderförmigen Auffaltung gemäß Figur 7 wird anschließend längs einer unterhalb des Anschlußbleches 3 verlaufenden Faltkante F umgeklappt, so daß eine Doppelung des meanderförmigen Faltpackets erreicht wird, wie aus dem unteren Schnittbild in Figur 8 ersichtlich. Schließlich wird dies Faltpacket noch um zwei parallel zur Faltkante A verlaufende Faltkanten G um 180° umgelegt und rückseitig an den das Anschlußblech 3 enthaltenden Luftsackbereich angedrückt. Damit ergibt sich die aus Figur 9 ersichtliche Endform, die in den Querabmessungen im wesentlichen auf das Maß des Anschlußbleches 3 reduziert ist und das aus der Schnittdarstellung von Figur 9 ersichtliche, ineinander geschachtelte und weitgehend mäanderförmige Faltbild ergibt. Es sei noch einmal betont, daß die beiden Faltkanten G in der Darstellung nur deswegen so weit voneinander beabstandet sind, weil die Dicke der Gewebelagen größer gezeichnet werden mußte. In der Realität liegen diesen beiden Kanten wesentlich enger nebeneinander, und das Gesamtpaket hat eine wesentlich geringere Dicke als im Schnittbild der Figur 9.

Das erfindungsgemäße Faltverfahren unterscheidet sich von bisher bekannten in erster Linie dadurch, daß etwa eine Hälfte der Ausgangsform in die andere Hälfte eingestülpt wird und daß die Reduzierung der flächigen Erstreckung im wesentlichen durch mäanderförmiges Einfalten erreicht wird. Bei sog. Schußversuchen hat sich herausgestellt, daß die mit dem erfindungsgemäßen Verfahren erreichte Packform sich bei einer Aktivierung des Treibsatzes problemlos entfaltet und daß der Luftsack ohne weiteres innerhalb der im Bereich von 10 Millisekunden liegenden Aufblaszeit seine Endform erreicht und so die optimale Schutzfunktion ausüben kann. Das erfindungsgemäße Faltverfahren ist nicht unbedingt auf die im Ausführungsbeispiel gezeigte Ausgangsform beschränkt. Maßgeblich ist nur, daß durch Einstülpen eine Doppelung der Gewebelagen erreicht werden kann und daß anschließend mäanderförmig eingefaltet wird.

## Patentansprüche

1. Verfahren zum Falten eines Luftsacks eines Seitenairbags in einer Packform, der aus einem im wesentlichen rechteckigen, an den Ecken gerundeten Gewebeabschnitt (1) besteht, der längs einer Faltkante A auf eine etwa quadratische Form gefaltet ist und dessen übereinandergelegte, freie Ränder (2a, 2b, 2c) zur Ausbildung eines geschlossenen Luftsacks miteinander verbunden sind und in dem im Bereich der Faltkante A ein Anschlußblech (3) für einen Gasgenerator mit nach außen durch das Gewebe vorstehenden Befestigungsbolzen (4) angeordnet werden kann, mit folgenden Schritten:
- der zur Faltkante A etwa senkrecht verlaufende Rand (2a) des das Anschlußblech (3) nicht enthaltenden Teils des Luftsacks wird in den Luftsack eingestülpt, so daß er parallel und benachbart zum gegenüberliegenden Rand (2c) liegt und daß eine im wesentlichen überall vierlagige, sich parallel zum Anschlußblech (3) erstreckende Faltform entsteht,
- die beiden Gewebeabschnittshälften (1a, 1b) werden parallel zur Faltkante A zu einer Faltform (5) eingefaltet, bei der das Anschlußblech (3) unmittelbar neben einer randseitigen Faltkante B1 liegt, wobei die dieser Faltkante gegenüberliegenden Ränder (2b) der Gewebeabschnitte (1a, 1b) nebeneinanderliegend angeordnet sind und das Anschlußblech (3) und die Gewebeabschnitte (1a, 1b) in zueinander parallelen Ebenen liegen,
- diese Faltform (5) wird unter Verwendung eines Faltlineals (6) längs zur Faltkante A sowie zueinander paralleler und vom Anschlußblech (3) sowie voneinander beabstandeter Faltkanten (D) um etwa 90° aus der zum Anschlußblech (3) parallelen Ebene nach unten umgelegt, wobei zwischen je zwei Lagen der Gewebeabschnitte (1a, 1b) ein Freiraum (7) für das Einschieben eines Faltlineals gebildet wird,
- der Freiraum (7) wird mittels eines Faltlineals (8) verbreitert, und das restliche Gewebematerial wird anschließend mittels weiterer, außen angreifender und eingeschobener Faltlineale (9, 10) beidseitig von der Mitte des Freiraums (7) mehrfach mäanderförmig in zum Anschlußblech (3) parallele Lagen eingefaltet und es wird schließlich
- die so entstandene Packform (11) um zwei senkrecht zueinander verlaufende Faltkanten (F und G) um 180° umgelegt und rückseitig an den das Anschlußblech (3) enthaltenden Luftsackbereich angedrückt.

2. Verfahren nach Anspruch 1, **dadurch gekennzeichnet, daß** von einem Luftsack ausgegangen wird, in dem das Anschlußblech (3) symmetrisch zur Faltkante A angeordnet ist.

3. Verfahren nach Anspruch 1, **dadurch gekennzeichnet, daß** von einem Luftsack ausgegangen wird, in dem das Anschlußblech (3) asymmetrisch zur Faltkante A angeordnet ist.

## Claims

1. A method for folding a gas bag of a side airbag in a packet form, which consists of a substantially rectangular fabric section (1) rounded at the comers, which is folded along a fold edge A to an approximately square shape and the free edges (2a, 2b, 2c) of which, placed one over another, are connected with each other to form a closed gas bag, and in which in the region of the fold edge A a connecting plate (3) for a gas generator can be arranged, the connecting plate having fastening bolts (4) projecting outwards through the fabric, comprising the following steps:
- the edge (2a), running approximately perpendicularly to the fold edge A, of that part of the gas bag not containing the connecting plate (3), is turned into the gas bag, so that it lies parallel and adjacent to the opposite edge (2c) and that a fold form is produced which is four-layered substantially throughout and extends parallel to the connecting plate (3),
- the two fabric section halves (1a, 1b) are folded in parallel to the fold edge A to a fold form (5) in which the connecting plate (3) lies immediately adjacent to a fold edge B1 on the rim side, the edges (2b) of the fabric sections (1a, 1b) lying opposite this fold edge being arranged lying adjacent to each other, and the connecting plate (3) and the fabric sections (1a, 1b) lying in planes parallel to each other,
- this fold form (5) is turned down through approximately 90° from the plane parallel to the connecting plate (3), using a fold rule (6), along the fold edge A as well as along fold edges (D) lying parallel to each other and spaced apart from the connecting plate (3) and from each other, a free space (7) being formed between every two layers of the fabric sections (1a, 1b) for the insertion of a fold rule,
- the free space (7) is widened by means of a fold rule (8) and the remaining fabric material is then folded in by means of further, externally engaging and inserted fold rules (9, 10) on both sides from the center of the free space (7) several times in meandering form in layers parallel to the connecting plate (3), and finally
- the packet form (11) thus produced is turned down through 180° around two fold edges (F and G) running perpendicularly to each other and is pressed on the reverse face against the gas bag region containing the connecting plate (3).

2. The method according to Claim 1, **characterized in that** one proceeds from an gas bag in which the connecting plate (3) is arranged symmetrically to the fold edge A.

3. The method according to Claim 1, **characterized in that** one proceeds from an gas bag in which the connecting plate (3) is arranged asymmetrically to the fold edge A.

## Revendications

1. Procédé de pliage d'un coussin à gaz d'un airbag latéral à la forme de paquet, qui est constitué par un tronçon de tissu (1) sensiblement rectangulaire et arrondi dans les coins, qui est plié le long d'une arête de pliage A, en une forme approximativement carrée et dont les bords libres (2a, 2b, 2c) posés les uns sur les autres sont reliés les uns aux autres pour former un coussin à gaz fermé et dans lequel dans la région de l'arête A, une tôle de raccordement (3) pour un générateur de gaz peut être agencée, avec des boulons de fixation faisant saillie vers l'extérieur à travers le tissu, présentant les étapes suivantes :
- Le bord (2a), s'étendant approximativement perpendiculairement à l'arête de pliage A, de la partie du coussin à gaz qui ne contient pas la tôle de raccordement (3), est retourné vers l'intérieur dans le coussin à gaz de sorte qu'il est situé parallèlement et au voisinage du bord opposé (2c) et qu'il est produit une forme de pliage en quatre couches sensiblement partout et s'étendant parallèlement à la tôle de raccordement (3),
- les deux moitiés de tronçon de tissu (1a, 1b) sont pliées parallèlement à l'arête de pliage pour obtenir une forme de pliage (5) dans laquelle la tôle de raccordement (3) est située directement à côté d'une arête de pliage B 1 côté bord, les bords (2b) opposés à cette arête de pliage, des tronçons de tissus (1a, 1b), étant agencés les uns à côté des autres et la tôle de raccordement (3) et les tronçons de tissu (1a, 1b) étant situés dans des plans parallèles l'un à l'autre,
- la forme de pliage (5) est repliée vers le bas sur au moins 90° à partir du plan parallèle à la tôle de raccordement (3), en utilisant un guide de pliage (6) le long de l'arête de pliage A ainsi que le long d'arêtes de pliage D parallèles l'une à l'autre et espacées de la tôle de raccordement (3) ainsi que l'une de l'autre, un espace libre (7) étant formé entre deux couches des tronçons de tissu (1a, 1b) pour introduire le guide de pliage,
- l'espace libre (7) est élargi au moyen d'un guide de pliage (8), et le reste du matériau de tissu est ensuite plié au moyen d'autres guides de pliage (9, 10) introduites et engagées sur l'extérieur des deux côtés du milieu de l'espace libre (7), plusieurs fois en forme de méandres en couches parallèles à la tôle de raccordement (3) et pour finir
- la forme de paquet (11) ainsi produite est repliée sur 180° sur deux arêtes de pliage (F et G) s'étendant perpendiculairement l'une à l'autre et elle est pressée sur la face postérieure de la région du coussin à gaz qui contient la tôle de raccordement (3).

2. Procédé selon la revendication 1, **caractérisé en ce qu'**on part d'un coussin à gaz dans lequel la tôle de raccordement (3) est agencée de manière symétrique à l'arête de pliage A.

3. Procédé selon la revendication 1, **caractérisé en ce qu'**on part d'un coussin à gaz dans lequel la tôle de raccordement (3) est agencée de manière asymétrique à l'arête de pliage A.
